# EUROPÄISCHE PATENTSCHRIFT

(11) **EP 2 660 492 B1**
(45) Veröffentlichungstag und Bekanntmachung des Hinweises auf die Patenterteilung: **14.01.2015**
(21) Anmeldenummer: 12166851.1
(22) Anmeldetag: 04.05.2012
(51) Int. Cl.: F16H 3/097

(54) **Manuelles Stufenwechselgetriebe**
Manual multi-speed drive
Boîte de vitesses manuelle

(43) Veröffentlichungstag der Anmeldung: 06.11.2013
(73) Patentinhaber: GETRAG Getriebe- und Zahnradfabrik Hermann Hagenmeyer GmbH & Cie KG, 74199 Untergruppenbach (DE)
(72) Erfinder: Paradiso, Domenico, 70100 Bari (IT); Bellomo, Pietro, 70100 Bari (IT)
(74) Vertreter: Witte, Weller & Partner Patentanwälte mbB

(56) Entgegenhaltungen:
- DE-A1- 10 065 078
- JP-A- 2002 323 096
- JP-A- 2003 172 413
- JP-A- 2009 154 610
- US-A- 5 417 125
- US-A- 5 517 874

## Beschreibung

Die vorliegende Erfindung betrifft ein Stufenwechselgetriebe für den Längseinbau in einem Kraftfahrzeug, mit einer Eingangswelle, die in einer Längsachse ausgerichtet und mit einer Trennkupplung verbindbar ist, mit einer Ausgangswelle, die koaxial zu der Eingangswelle ausgerichtet ist, und mit einer ersten Vorgelegewelle, wobei die Eingangswelle über wenigstens einen schaltbaren Vorwärtsradsatz mit der ersten Vorgelegewelle verbindbar ist und wobei die erste Vorgelegewelle über einen Konstantenradsatz mit der Ausgangswelle verbunden ist.

Auf dem Gebiet der Stufenwechselgetriebe für Kraftfahrzeuge unterscheidet man generell zwischen Handschaltgetrieben, automatisierten Schaltgetrieben, Doppelkupplungsgetrieben sowie Wandler-Automatikgetrieben und stufenlosen Getrieben. Die letzteren Getriebetypen arbeiten generell automatisiert. Während bei Handschaltgetriebe Schaltkupplungspakete zum Betätigen von zwei Gangstufen generell benachbarte Gangstufen betätigen sollten (so dass ein H-Schema für den Gangschalthebel eingerichtet werden kann), besteht diesbezüglich bei automatisierten Getrieben ein höherer Freiheitsgrad.

Ferner unterscheidet man generell zwischen solchen Getrieben, die im Kraftfahrzeug quer zur Längsachse des Kraftfahrzeuges eingebaut werden, und solchen Getrieben, die parallel zu der Längsachse des Kraftfahrzeuges eingebaut werden. Der zuletzt genannte Getriebetyp wird häufig für Kraftfahrzeuge mit Heckantrieb verwendet.

Bei den Getrieben, die für den Front-Quer-Einbau ausgelegt sind, besteht ein hoher Bedarf nach einer kurzen axialen Baulänge. Bei Kraftfahrzeuggetrieben für den Längseinbau ist es hingegen von Bedeutung, dass das Getriebe radial kompakt baut. Denn derartige Getriebe sind häufig überlappend mit einem Fahrgastraum des Kraftfahrzeuges eingebaut, so dass eine Bauform mit großem Durchmesser starke Beschränkungen hinsichtlich des Fahrgastraumes bedeuten würde.

Bei Getrieben für den Längseinbau ist es daher vorzugsweise so, dass eine Eingangswelle nicht nur parallel sondern koaxial zu einer Ausgangswelle angeordnet ist. Eine Verbindung der Eingangswelle mit der Ausgangswelle richtet dabei eine sogenannte Direktgangstufe ein, die in der Regel eine Gangstufe für den höchsten oder einen der höchsten Vorwärtsgänge darstellt.

Wichtig für solche Stufenwechselgetriebe ist generell auch die erzielbare Spreizung, da hierdurch der Kraftstoffverbrauch des Kraftfahrzeuges verringert werden kann.

In den Dokumenten US 5,517,874 A, JP 2002 323096 A, DE 100 65 078 A1 und JP 2003 172413 A sind verschiedene Beispiele für bekannte Stufenwechselgetriebe dargestellt. Das Dokument US 5,517,874 A offenbart ein Stufenwechselgetriebe nach dem Oberbegriff des Anspruchs 1.

Vor diesem Hintergrund ist es eine Aufgabe der Erfindung, ein verbessertes Stufenwechselgetriebe für den Längseinbau in einem Kraftfahrzeug anzugeben, das zumindest im Hinblick auf einen der obengenannten Aspekte eine Verbesserung darstellt.

Diese Aufgabe wird bei dem eingangs genannten Stufenwechselgetriebe dadurch gelöst, dass das Stufenwechselgetriebe eine zweite Vorgelegewelle aufweist, die parallel zu der ersten Vorgelegewelle angeordnet ist, wobei die Eingangswelle über wenigstens einen zweiten schaltbaren Vorwärtsradsatz mit der zweiten Vorgelegewelle verbindbar ist und wobei die zweite Vorgelegewelle über einen Konstantenradsatz mit der Ausgangswelle verbunden ist, wobei Vorgelegelängsachsen der ersten und/oder der zweiten Vorgelegewelle in einer vertikalen Projektion radial innerhalb der radialen Erstreckung des größten Rades liegen, das an der Eingangswelle angeordnet ist.

Während ein derartiger Drei-Wellen-Aufbau auf dem Gebiet der Stufenwechselgetriebe für den Front-Quereinbau generell nicht unüblich ist, um eine kurze axiale Baulänge zu erzielen, ist ein derartiger Ansatz für Stufenwechselgetriebe auch für den Längseinbau in einem Kraftfahrzeug überraschenderweise nicht nachteilig sondern kann zur Erzielung einer Reihe von Vorteilen verwendet werden.

Die Vorgelegelängsachsen liegen in einer vertikalen Projektion radial innerhalb der radialen Erstreckung des größten Rades, das an der Eingangswelle angeordnet ist

Hierdurch können die zwei Vorgelegelängsachsen in Querrichtung des Kraftfahrzeuges relativ eng zusammenrücken und folglich eine radial kompakte Bauweise auch in einem unteren Abschnitt des Kraftfahrzeuggetriebes realisieren.

Während eine Ausgangswelle des Getriebes bei Stufenwechselgetrieben für den Front-Quereinbau generell parallel versetzt zu einer Eingangswelle angeordnet ist, ist bei dem erfindungsgemäßen Stufenwechselgetriebe die Eingangswelle koaxial zu der Ausgangswelle angeordnet. Hierdurch ergibt sich die Möglichkeit der Einrichtung einer Direktgangstufe.

Ferner kann durch ein derartiges "Layout" eine hohe Spreizung erzielt werden. Auch ist es möglich, das Getriebe mit wenigen Zahnrädern und folglich mit einem geringen Gewicht zu realisieren.

Zudem kann nicht nur ein axial kurzer Aufbau erzielt werden. Auch in radialer Richtung kann das Getriebe bei geeigneter Anordnung der Gangstufen kompakt ausgebildet werden. Insbesondere kann es bei geeigneter Anordnung der Radsätze ermöglicht werden, dass das Stufenwechselgetriebe im Bereich eines Getriebeausgangs radial kompakt baut.

Der Konstantenradsatz, der die erste Vorgelegewelle mit der Ausgangswelle verbindet, und der Konstantenradsatz, der die zweite Vorgelegewelle mit der Ausgangswelle verbindet, können zu einem einzelnen Konstantenradsatz zusammengefasst werden.

Ferner kann ein derartiges Stufenwechselgetriebe als Handschaltgetriebe ausgebildet werden. Zu diesem Zweck ist es bevorzugt, wenn Schaltkupplungspakete zum Betätigen von zwei Vorwärtsgangstufen jeweils zwei benachbarte Vorwärtsgangstufen betätigen, so dass die Integration in ein H-Schaltschema für einen Schalthebel realisierbar ist. Es versteht sich jedoch, dass ein derartiges Stufenwechselgetriebe auch als automatisiertes Stufenwechselgetriebe ausgeführt sein kann.

Die Aufgabe wird somit vollkommen gelöst.

Gemäß einer besonders bevorzugten Ausführungsform ist die Eingangswelle über eine Direktschaltkupplung zur Einrichtung einer Direktgangstufe mit der Ausgangswelle verbindbar.

Hierdurch kann eine kurze axiale Bauform realisiert werden.

Dabei ist es von besonderem Vorteil, wenn die Direktgangstufe eine zweitbis sechsthöchste Vorwärtsgangsstufe, insbesondere eine vierte oder eine dritte Vorwärtsgangstufe ist. Bevorzugt ist es, wenn die Direktgangstufen die Gangstufe 3 oder 4 ist, oder die Gangstufe 5 oder 6.

Bei dieser Ausführungsform können Radsätze für die höheren Gangstufen in axialer Richtung zwischen der Direktschaltkupplung und einem Getriebeeingang angeordnet werden. Hierdurch lässt sich eine sehr hohe Spreizung realisieren, die vorzugsweise größer 8 realisierbar ist, insbesondere größer 9, und vorzugsweise bis etwa 10.

Gemäß einer besonders bevorzugten Ausführungsform ist es hierbei bevorzugt, wenn das Stufenwechselgetriebe wenigstens sechs, insbesondere aber wenigstens sieben Vorwärtsgangstufen aufweist, beispielsweise sieben Vorwärtsgangstufen oder acht Vorwärtsgangstufen.

Gemäß einer weiteren bevorzugten Ausführungsform ist an der Eingangswelle eine mit der Direktschaltkupplung zu einem Schaltkupplungspaket zusammengefasste Vorwärtsschaltkupplung für eine der Direktgangstufe benachbarte Nachbar-Vorwärtsgangstufe gelagert.

Hierdurch können zwei Schaltkupplungen zu einem Schaltkupplungspaket zusammengefasst werden, wobei die eine Schaltkupplung die Direktschaltkupplung ist.

Die Direktgangstufe kann bspw. eine der Gangstufen 3, 4, 5 oder 6 sein. Sofern die Direktgangstufe bspw. die Gangstufe 4 ist, ist die Nachbar-Vorwärtsgangstufe vorzugsweise die Gangstufe 3. Wenn die Direktgangstufe die Vorwärtsgangstufe 3 ist, ist die Nachbar-Vorwärtsgangstufe vorzugsweise die Gangstufe 4.

Hierdurch ist es möglich, dieses Schaltkupplungspaket für die Gangstufen 3 und 4 vorzusehen, wobei dieses Schaltkupplungspaket relativ nahe am Getriebeausgang angeordnet ist. Ein Schaltkupplungspaket für die Gangstufen 1 und 2, das zur Einrichtung des H-Schaltschemas vorteilhaft ist, kann bei dieser Ausführungsform nahe dem Getriebeeingang angeordnet werden. Da die unteren Gangstufen generell größere Übersetzungen und folglich Räder mit einem größeren Durchmesser erfordern, ist es hierdurch möglich, die radiale Ausdehnung des Getriebes im Bereich des Getriebeausgangs kleiner vorzusehen als im Bereich des Getriebeeingangs.

Unter dem Getriebeeingang wird vorliegend jener Teil des Stufenwechselgetriebes verstanden, der benachbart ist zu einer Trennkupplung bzw. zu einem Antriebsmotor (beispielsweise Verbrennungsmotor) des Kraftfahrzeuges.

Gemäß einer weiteren bevorzugten Ausführungsform sind ferner Schaltkupplungen für sämtliche Gangstufen des Stufenwechselgetriebes außer der Direktgangstufe und der Nachbar-Vorwärtsgangstufe an der ersten und/oder der zweiten Vorgelegewelle angeordnet.

Mit anderen Worten werden diese anderen Gangstufen über Festräder eingerichtet, die fest mit der Eingangswelle verbunden sind.

Auch dies kann zu einer radial kompakten Bauweise führen. Insbesondere aber ist es auch möglich, hierdurch sogenannte Doppelnutzungen einzuführen, wobei ein Festrad an der Eingangswelle sowohl mit einem Losrad an der ersten Vorgelegewelle als auch mit einem Losrad an der zweiten Vorgelegewelle in Eingriff steht.

Gemäß einer weiteren insgesamt bevorzugten Ausführungsform ist es bevorzugt, wenn eine Rückwärtsgangstufe als Windungsgangstufe eingerichtet ist, wobei der Leistungsfluss von der Eingangswelle über eine der Vorgelegewellen zu der anderen Vorgelegewelle und von dort zur Ausgangswelle geführt ist.

Bei dieser Ausführungsform ist es nicht notwendig, für die Rückwärtsgangstufe eine separate Nebenwelle vorzusehen, die die radiale Baugröße vergrößern würde. Demzufolge kann das Stufenwechselgetriebe radial kompakt ausgeführt werden.

Bevorzugt ist es dabei, wenn ein der Rückwärtsgangstufe zugeordnetes Losrad an einer der Vorgelegewellen mit einem Losrad in Eingriff steht, das an der anderen Vorgelegewelle drehbar gelagert ist und das der Vorwärtsgangstufe 1 oder der Vorwärtsgangstufe 2 zugeordnet ist.

Hierdurch kann der Rückwärtsgang mit einer geeigneten Übersetzung bereitgestellt werden.

Gemäß einer weiteren insbesondere bevorzugten Ausführungsform stehen Losräder von wenigstens zwei Vorwärtsgangstufen mit einem gemeinsamen Festrad in Eingriff, das an der Eingangswelle festgelegt ist.

Wie bereits oben erwähnt, kann durch eine derartige "Doppelnutzung" dieses Festrades die axiale Baulänge verkürzt werden.

Gemäß einer insgesamt bevorzugten Ausführungsform sind auf der ersten Vorgelegewelle ein Schaltkupplungspaket für die Vorwärtsgangstufen 1, 2 und ein Schaltkupplungspaket für die Vorwärtsgangstufen 5, 6 in dieser Reihenfolge oder umgekehrt, von einem Eingang des Stufenwechselgetriebes aus gesehen, angeordnet.

Hierdurch kann zumindest in einer Variante die radiale Baugröße zum Getriebeausgang hin abnehmen. Ferner kann durch diese Schaltkupplungspakete die Einrichtung eines H-Schaltschemas für ein manuelles Schaltgetriebe ermöglicht werden.

Gemäß einer alternativen Ausführungsform sind auf der ersten Vorgelegewelle ein Schaltkupplungspaket für die Vorwärtsgangstufen 3, 2 und ein Schaltkupplungspaket für die Vorwärtsgangstufen 6, 7 in dieser Reihenfolge oder umgekehrt, von einem Eingang des Stufenwechselgetriebes aus gesehen, angeordnet. Bei dieser alternativen Ausführungsform kann ein alternatives H-Schaltschema für ein manuelles Schaltgetriebe ermöglicht werden.

Gemäß einer weiteren insgesamt bevorzugten Ausführungsform ist auf der zweiten Vorgelegewelle ein Schaltkupplungspaket für eine Rückwärtsgangstufe und für wenigstens eine Vorwärtsgangstufe (z.B. 7 oder 1) angeordnet.

Die Vorwärtsgangstufe, die auf der gleichen Vorgelegewelle angeordnet ist wie die Rückwärtsgangstufe, kann dabei in einer Ausführungsform die Vorwärtsgangstufe 7 sein. In einer alternativen Ausführungsform kann dies die Vorwärtsgangstufe 1 sein. Im letzteren Fall kann die Rückwärtsgangstufe vorzugsweise über die Vorwärtsgangstufe 2 realisiert werden (als Windungsgangstufe, siehe unten).

Gegebenenfalls kann auf der zweiten Vorgelegewelle noch eine Schaltkupplung für eine Vorwärtsgangstufe 8 vorgesehen sein.

Besonders bevorzugt ist es dabei, wenn das Schaltkupplungspaket für die Rückwärtsgangstufe R und für die Vorwärtsgangstufe (z.B. 7 oder 1) in axialer Richtung gesehen zwischen den Schaltkupplungspaketen für die Gangstufen 1, 2 bzw. die Gangstufen 5, 6 angeordnet ist.

Hierdurch kann gegebenenfalls eine Doppelnutzung realisiert werden.

Soweit vorliegend von einer Reihenfolge von Schaltkupplungspaketen auf Wellen des Stufengetriebes die Rede ist, so versteht sich, dass die diesem Schaltkupplungspaket zugeordneten Gangstufen auf axial gegenüberliegenden Seiten des Schaltkupplungspaketes auch vertauscht werden können.

Von besonderem Vorzug ist es, wenn die Rückwärtsgangstufe R in axialer Richtung von einem Eingang des Stufenwechselgetriebes aus gesehen vor oder hinter einer Vorwärtsgangstufe angeordnet ist, die mittels eines Schaltkupplungspaketes betätigt wird, mittels dessen auch die Rückwärtsgangstufe betätigt wird.. Generell ist es dabei möglich, die Rückwärtsgangstufe als Windungsgangstufe mit der Vorwärtsgangstufe 1 oder 2 zu realisieren.

Wie oben erwähnt, ist auf der zweiten Vorgelegewelle vorzugsweise ferner ein Losrad für eine Vorwärtsgangstufe 8 angeordnet, und zwar, von dem Eingang des Stufenwechselgetriebes aus gesehen, hinter oder vor einem Losrad für die Vorwärtsgangstufe 7.

Durch das Bereitstellen einer achten Vorwärtsgangstufe kann die Spreizung nochmals erhöht werden.

Ein Losrad für die Vorwärtsgangstufe 8 kann dabei mittels einer Schaltkupplung betätigt werden, die keinem Schaltkupplungspaket zugeordnet ist, sondern nur zum Einlegen der Vorwärtsgangstufe 8 dient. Alternativ ist es möglich, an der Vorgelegewelle ein Schaltkupplungspaket vorzusehen, mittels dessen die Vorwärtsgangstufen 7, 8 alternativ betätigbar sind. In diesem Fall ist es bevorzugt, wenn der Rückwärtsgangstufe eine einzelne Schaltkupplung zum Ein- und Auslegen der Rückwärtsgangstufe zugeordnet ist.

In einer Variante kann die Reihenfolge der Gangstufen auf der zweiten Vorgelegewelle R, 7, 8 sein. In einer alternativen Ausführungsform ist diese Reihenfolge R, 8, 7.

Die Vorwärtsgangstufe 8 kann durch eine Doppelnutzung eines Festrades der Eingangswelle eingerichtet werden. Hierbei ist es möglich, das Losrad für die Vorwärtsgangstufe 8 mit einem Festrad in Eingriff zu bringen, das auch mit einem Losrad der Vorwärtsgangstufe 5 zugeordnet ist, oder mit einem Losrad, das der Vorwärtsgangstufe 6 zugeordnet ist.

Es ist insgesamt ferner vorteilhaft, wenn Vorgelegelängsachsen der ersten und/oder der zweiten Vorgelegewelle unterhalb der Eingangswelle angeordnet sind.

Hierdurch kann ein Gehäuse im Querschnitt so realisiert werden, dass es zum oberen Bereich hin, der gegebenenfalls im Bereich eines Fahrgastraumes liegt, relativ schmal bzw. radial kompakt ausgebildet ist, wohingegen das Gehäuse in einem unteren Abschnitt etwas breiter ausgeführt werden kann, in Querrichtung des Kraftfahrzeuges gesehen.

Die Begriffe "oben" und "unten" beziehen sich vorliegend vorzugsweise auf die Richtung der Gravitationskraft, derart, dass ein oben angeordnetes Bauteil von der Gravitation generell in Richtung hin nach unten gezogen wird.

Zur Erzielung einer radial kompakten Bauweise ist es ferner bevorzugt, wenn Vorgelegelängsachsen der ersten und/oder der zweiten Vorgelegewelle in einer horizontalen Projektion radial außerhalb der radialen Erstreckung des größten Rades liegen, das an der Eingangswelle angeordnet ist.

Ferner ist es insgesamt vorteilhaft, wenn das Stufenwechselgetriebe als Handschaltgetriebe bzw. manuelles Schaltgetriebe ausgeführt ist. Dies bedeutet vorzugsweise, dass Schaltkupplungspakete jeweils benachbarte Vorwärtsgangstufen betätigen. Es ist jedoch möglich, ein derartiges Stufenwechselgetriebe auch automatisiert zu betätigen, so dass das Stufenwechselgetriebe auch als automatisiertes Schaltgetriebe ausgeführt sein kann.

Insgesamt ist es ferner vorteilhaft, wenn eine elektrische Maschine mit einem Festrad verbunden ist, das mit der ersten oder der zweiten Vorgelegewelle fest verbunden ist. Dies kann beispielsweise ein Rad von einem Konstantenradsatz sein. Alternativ ist es möglich, die elektrische Maschine mit einem Festrad zu verbinden, das der oben erwähnten Nachbar-Vorwärtsgangstufe zugeordnet ist. In diesen Fällen wirkt die elektrische Maschine auf den Ausgang des Getriebes.

Die Anbindung einer elektrische Maschine ermöglicht auf diese Weise eine Hybridisierung des Stufenwechselgetriebes, wobei vorzugsweise eine Unterstützung durch einen elektromotorischen Betrieb der elektrische Maschine insbesondere in mittleren Drehzahlen ermöglicht werden kann, oder auch zum Anfahren (im Bereich niedriger Drehzahlen).

Die Ausgestaltung des Stufenwechselgetriebes derart, dass die Vorgelegewellen über Konstantenradsätze bzw. einen einzelnen Konstantenradsatz mit der Ausgangswelle verbunden sind, hat im Gegensatz zu sogenannten Antriebskonstanten (bei denen Konstantenradsätze die Eingangswelle mit den Vorgelegewellen verbinden) den Vorteil, dass die Zahnräder der schaltbaren Radsätze kleiner dimensioniert werden können, wobei diese gegebenenfalls mit höheren Drehzahlen laufen.

Auch dies kann folglich zu einer kompakten Bauweise des Stufenwechselgetriebes beitragen.

Die Ausgangswelle hat vorzugsweise eine eigene Lagerung und ist vorzugsweise mit einem Differential verbunden.

Die Erfindung ist folglich auch durch einen Antriebsstrang realisierbar, bei dem in axialer Richtung eine Trennkupplung, das Stufenwechselgetriebe und ein Differential hintereinander angeordnet sind, und zwar in Längsrichtung des Kraftfahrzeuges.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug mit einer Ausführungsform eines erfindungsgemäßen Stufenwechselgetriebes;
- Fig. 2: eine schematische Querschnittansicht durch ein Kraftfahrzeug und eine Ausführungsform eines erfindungsgemäßen Stufenwechselgetriebes;
- Fig. 3: eine Übersicht von Zahneingriffen bei Einrichtung der Gangstufen des Stufenwechselgetriebes der Fig. 1;
- Fig. 4: eine schematische Querschnittsansicht durch eine alternative Ausführungsform eines erfindungsgemäßen Stufenwechselgetriebes;
- Fig. 5: eine schematische Querschnittsansicht durch eine alternative Ausführungsform eines erfindungsgemäßen Stufenwechselgetriebes;
- Fig. 6: eine schematische Querschnittsansicht durch eine alternative Ausführungsform eines erfindungsgemäßen Stufenwechselgetriebes; und
- Fig. 7: eine schematische Querschnittsansicht durch eine alternative Ausführungsform eines erfindungsgemäßen Stufenwechselgetriebes.

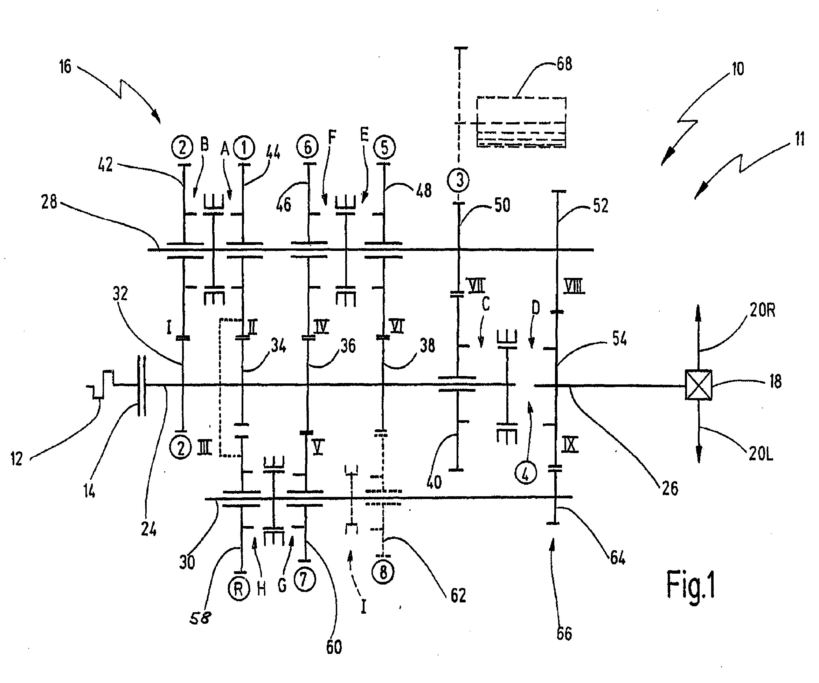

In Fig. 1 ist in schematischer Form ein Antriebsstrang 10 für ein Kraftfahrzeug 11 dargestellt. Der Antriebsstrang 10 beinhaltet einen Antriebsmotor 12 wie einen Verbrennungsmotor sowie eine Anfahr- und Trennkupplung 14. Ein Eingangsglied der Anfahr- und Trennkupplung 14 ist mit einem Ausgang des Antriebsmotors 12 verbunden. Ein Ausgangsglied der Anfahr- und Trennkupplung 14 ist mit dem Eingang eines Stufenwechselgetriebes 16 verbunden. Ein Ausgang des Stufenwechselgetriebes 16 ist mit einem Differential 18 verbunden, das Antriebsleistung auf zwei angetriebene Räder 20L, 20R des Kraftfahrzeuges 11 verteilt. Es versteht sich, dass ein Getriebeausgang ferner auch mit einer zweiten Achse des Kraftfahrzeuges 11 verbunden sein kann, um auf diese Weise einen Allradantrieb einzurichten.

Das Stufenwechselgetriebe 16 weist eine Eingangswelle 24 auf, die mit dem Ausgangsglied der Anfahr- und Trennkupplung 14 verbunden ist. Die Eingangswelle 24 ist parallel zu einer Längsachse des Kraftfahrzeuges 11 ausgerichtet. Das Stufenwechselgetriebe 16 ist in dem Kraftfahrzeug 11 längs eingebaut.

Das Stufenwechselgetriebe 16 weist ferner eine Ausgangswelle 26 auf, die koaxial zu der Eingangswelle 24 angeordnet ist. Die Ausgangswelle 26 ist mit einem Eingangsglied des Differentials 18 verbunden.

Das Stufenwechselgetriebe 16 beinhaltet ferner eine erste Vorgelegewelle 28, die parallel zu der Eingangswelle 24 angeordnet ist, sowie eine zweite Vorgelegewelle 30, die parallel zu der Eingangswelle 24 und parallel zu der ersten Vorgelegewelle 28 angeordnet ist, insbesondere parallel versetzt hierzu angeordnet ist. Das Stufenwechselgetriebe 16 ist zur Einrichtung von sieben Vorwärtsgangstufen 1 - 7 und einer Rückwärtsgangstufe R eingerichtet und ist als manuelles Schaltgetriebe ausgebildet, das jedoch nach Bedarf automatisiert werden kann.

An der Eingangswelle 24 sind, von einem Getriebeeingang aus gesehen, ein Festrad 32 für die Vorwärtsgangstufe 2, ein Festrad 34 für die Vorwärtsgangstufe 1 sowie die Rückwärtsgangstufe R, ein Festrad 36 für die Vorwärtsgangstufen 6, 7, ein Festrad 38 für die Vorwärtsgangstufe 5 sowie ein Losrad 40 für die Vorwärtsgangstufe 3 angeordnet. Die Festräder 32 - 38 sind drehfest mit der Eingangswelle 24 verbunden. Das Losrad 40 ist drehbar an der Eingangswelle 24 gelagert.

An der ersten Vorgelegewelle 28 sind, von einem Getriebeeingang aus gesehen, ein Losrad 42 für die Vorwärtsgangstufe 2, ein Losrad 44 für die Vorwärtsgangstufe 1, ein Losrad 46 für die Vorwärtsgangstufe 6, ein Losrad 48 für die Vorwärtsgangstufe 5, ein Festrad 50 für die Vorwärtsgangstufe 3 sowie ein Festrad 52 zur Bildung einer Abtriebskonstante angeordnet.

An der Ausgangswelle 26 ist ein Festrad 54 zur Bildung der Abtriebskonstante angeordnet, das mit dem Festrad 52 der ersten Vorgelegewelle 28 in Eingriff steht.

An der zweiten Vorgelegewelle 30 sind, von einem Getriebeeingang aus gesehen, ein Losrad 58 für die Rückwärtsgangstufe R, ein Losrad 60 für die Vorwärtsgangstufe 7, optional (gestrichelt dargestellt) ein Losrad 62 für eine Vorwärtsgangstufe 8, sowie ein Festrad 64 zur Bildung einer Abtriebskonstante angeordnet. Das Festrad 64 steht ebenfalls mit dem Festrad 54 in Eingriff, derart, dass die Festräder 52, 54, 64 einen Konstantenradsatz 66 bilden.

Das Festrad 32 steht mit dem Losrad 42 über einen Verzahnungseingriff I in Eingriff. Das Festrad 34 steht mit dem Losrad 44 über einen Verzahnungseingriff II in Eingriff. Das Losrad 58 steht über einen Verzahnungseingriff III mit dem Losrad 44 in Eingriff. Das Festrad 36 steht über einen Verzahnungseingriff IV mit dem Losrad 46 in Eingriff. Das Festrad 36 steht ferner über einen Verzahnungseingriff V mit dem Losrad 60 in Eingriff. Das Festrad 38 steht über einen Verzahnungseingriff VI mit dem Losrad 48 in Eingriff. Das Losrad 40 steht über einen Verzahnungseingriff VII mit dem Festrad 50 in Eingriff. Das Festrad 54 steht mit dem Festrad 52 über einen Verzahnungseingriff VIII in Eingriff. Das Festrad 54 steht mit dem Festrad 64 über einen Verzahnungseingriff IX in Eingriff.

Zwischen den Losrädern 42, 44 für die Vorwärtsgangstufen 2, 1 ist ein Schaltkupplungspaket mit zwei Schaltkupplungen B, A angeordnet. Das Schaltkupplungspaket ist so ausgebildet, dass alternativ das Losrad 42 mit der ersten Vorgelegewelle 28 verbindbar ist oder das Losrad 44 mit der ersten Vorgelegewelle 28 verbindbar ist.

In entsprechender Weise ist zwischen den Losrädern 46, 48 ein weiteres Schaltkupplungspaket mit Schaltkupplungen F, E angeordnet. Zwischen dem Losrad 40 und dem Festrad 54 ist ein weiteres Schaltkupplungspaket mit Schaltkupplungen C, D angeordnet. Die Schaltkupplung D ist dabei als Direktschaltkupplung ausgebildet, und zwar zur Einrichtung der Vorwärtsgangstufe 4. Die Schaltkupplung C dient zum Einlegen der Vorwärtsgangstufe 3, die vorliegend eine Nachbar-Vorwärtsgangstufe bildet.

Schließlich ist zwischen den Losrädern 58, 60 ein weiteres Schaltkupplungspaket mit Schaltkupplungen H, G angeordnet. Sofern das Stufenwechselgetriebe 16 mit acht Vorwärtsgangstufen ausgebildet ist, ist ferner dem Losrad 62 eine weitere Schaltkupplung I zugeordnet. In diesem Fall steht das Losrad 62 vorzugsweise mit dem Festrad 38 in Eingriff.

Alternativ können bei dieser Ausführungsform auch die Schaltkupplungen G, I zu einem Paket zusammengefasst werden, wobei die Rückwärtsgangstufe R über eine einzelne Schaltkupplung betätigt wird.

Die Rückwärtsgangstufe R ist bei dem Stufenwechselgetriebe 16 als Windungsgangstufe ausgebildet. Hierzu stehen das Losrad 58 und das Losrad 44 miteinander in Eingriff, derart, dass der Leistungsfluss bei eingelegter Rückwärtsgangstufe (betätigter Schaltkupplung H) von der Eingangswelle 24 über den Verzahnungseingriff II auf das Losrad 44 geführt wird, und von dort, unter Einrichtung einer Drehrichtungsumkehr, auf das Losrad 58, das an der zweiten Vorgelegewelle 30 drehbar gelagert ist, und von dieser über den Konstantenradsatz 66 zur Ausgangswelle 26.

Ferner ist zumindest für die Vorwärtsgangstufen 6, 7 eine Doppelnutzung eingerichtet, indem das Festrad 36 sowohl mit dem Losrad 46 als auch mit Losrad 60 in Eingriff steht.

Bei 68 ist gezeigt, dass das Stufenwechselgetriebe 16 auch hybridisiert werden kann, indem eine elektrische Maschine 68 beispielsweise mit dem Festrad 50 der Vorwärtsgangstufe 3 verbunden wird Alternativ kann die elektrische Maschine 68 auch mit dem Festrad 52 der ersten Vorgelegewelle 28 oder dem Festrad 64 der zweiten Vorgelegewelle 30 verbunden sein. Die elektrische Maschine 68 ist dabei vorzugsweise so ausgerichtet, dass ihre Antriebswelle parallel zu den Wellen 24, 26, 28, 30 des Stufenwechselgetriebes 16 ausgerichtet ist, so dass die Anbindung über einen Stirnradsatz erfolgen kann.

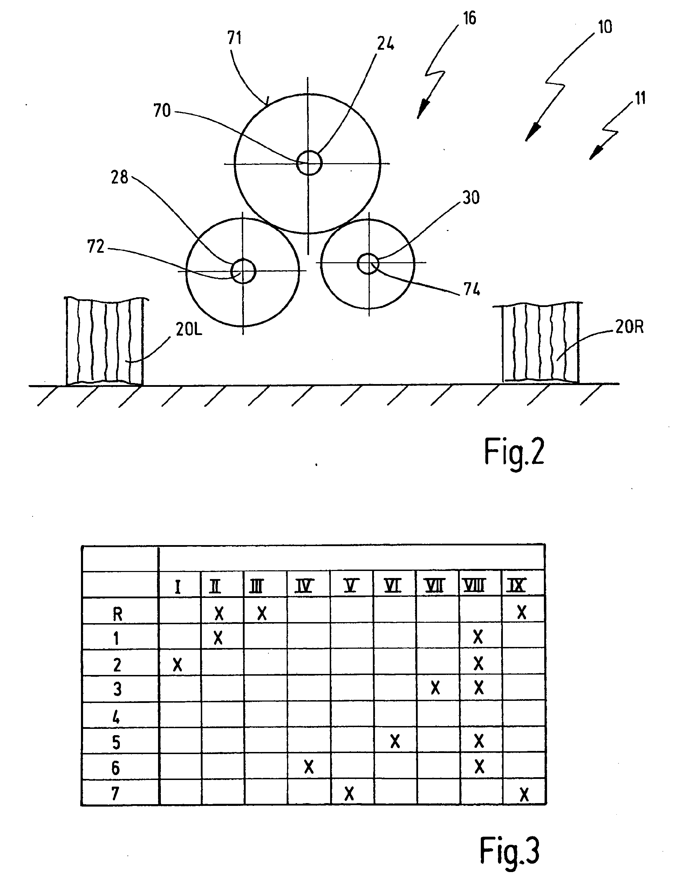

In Fig. 2 ist in schematischer Form eine weitere Ausführungsform eines Stufenwechselgetriebes 16 für einen Antriebsstrang 10 eines Kraftfahrzeuges 11 dargestellt, wobei das Stufenwechselgetriebe 16 hinsichtlich Aufbau und Funktion dem Getriebe der Fig. 1 entsprechen kann. Es ist zu erkennen, dass eine Längsachse 70 der Eingangswelle 24 parallel zu einer Längsachse des Kraftfahrzeuges 11 ausgerichtet ist. An der Eingangswelle 24 ist ein Rad 71 angeordnet, das von sämtlichen an der Eingangswelle 24 festgelegten oder gelagerten Rädern den größten Durchmesser aufweist.

Ferner sind in Fig. 2 die Längsachse 72 der ersten Vorgelegewelle 28 und die Längsachse 74 der zweiten Vorgelegewelle 30 dargestellt. Die Längsachsen 72, 74 sind unterhalb der Eingangswelle 24 angeordnet. Ferner liegen die Längsachsen 72, 74 in einer vertikalen Projektion radial innerhalb der radialen Erstreckung des größten Rades 71, das an der Eingangswelle 24 angeordnet ist. In einer horizontalen Projektion liegen die Längsachsen 72, 74 radial außerhalb der radialen Erstreckung des größten Rades 71, das an der Eingangswelle 24 angeordnet ist.

Fig. 3 zeigt die zum Einrichten der Vorwärtsgangstufen 1 - 7 bzw. der Rückwärtsgangstufe R verwendeten Verzahnungseingriffe I bis IX, sofern das Stufenwechselgetriebe 16 der Fig. 1 als 7-Gang-Getriebe ausgebildet ist.

Beispielhaft sei erwähnt, dass zur Einrichtung der Rückwärtsgangstufe R die Verzahnungseingriffe II, III und IX verwendet werden. Zur Einrichtung der ersten Vorwärtsgangstufe werden die Verzahnungseingriffe II und VIII verwendet.

Im Falle der Ausführung als 8-Gang-Getriebe würde zur Einrichtung der Vorwärtsgangstufe 8 der Verzahnungseingriff IX verwendet werden sowie ein Verzahnungseingriff zwischen den Rädern 38, 62.

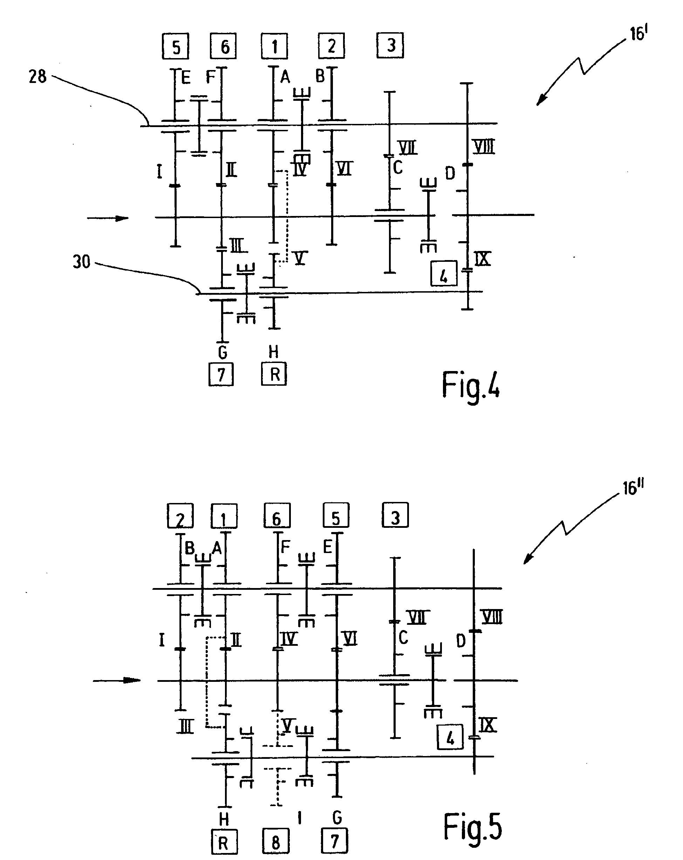

In den weiteren Figuren 4 bis 7 sind weitere Ausführungsformen von erfindungsgemäßen Stufenwechselgetrieben gezeigt, die hinsichtlich Aufbau und Funktionsweise generell dem Stufenwechselgetriebe 16 der Fig. 1 entsprechen. Gleiche Elemente sind daher durch gleiche Bezugszeichen gekennzeichnet. Im Folgenden werden im Wesentlichen die Unterschiede erläutert.

Bei dem Stufenwechselgetriebe 16' der Fig. 4 sind die Vorwärtsgangstufen und die Rückwärtsgangstufe, die mittels der Schaltkupplungen A, B; E, F; G, H betätigt werden, axial vertauscht bzw. gespiegelt gegenüber der Ausführungsform der Fig. 1 angeordnet. Genauer gesagt ergibt sich auf der ersten Vorgelegewelle 28 eine Reihenfolge der Vorwärtsgangstufen 5, 6, 1, 2, die durch die Schaltkupplungen E, F bzw. A, B betätigt werden. In entsprechender Weise ergibt diese "Spiegelung" auf der zweiten Vorgelegewelle 30 die folgende Reihenfolge von Gangstufen vom Getriebeeingang aus gesehen: 7, R betätigt durch Schaltkupplungen G, H.

Die Doppelnutzungen und sonstigen Aufbauten sind identisch wie bei der Ausführungsform der Fig. 1. Auch hier können eine Vorwärtsgangstufe 8 vorgesehen sein und/oder eine Hybridisierung.

Bei dem Stufenwechselgetriebe 16" der Fig. 5 wird im Wesentlichen das gleiche Grundlayout verwendet wie bei dem Stufenwechselgetriebe 16 der Fig. 1. Vorliegend steht das Losrad für die Vorwärtsgangstufe 7 jedoch mit einem Festrad in Eingriff, das ferner mit einem Losrad für die Vorwärtsgangstufe 5 in Eingriff steht (Doppelnutzung eines Festrades für die Vorwärtsgangstufen 5, 7. In diesem Fall kann eine Vorwärtsgangstufe 8 realisiert werden (optional), indem ein Losrad für die Vorwärtsgangstufe 8 mit einem Festrad in Eingriff steht, das ferner mit einem Festrad für die Vorwärtsgangstufe 6 in Eingriff steht (Doppelnutzung der Vorwärtsgangstufen 6, 8).

Ferner kann in diesem Fall vorgesehen sein, dass die Vorwärtsgangstufen 7, 8 über ein Schaltkupplungspaket betätigt werden, das die Schaltkupplungen I, G aufweist. In diesem Fall wird die Rückwärtsgangstufe mittels einer einzelnen Schaltkupplung H betätigt.

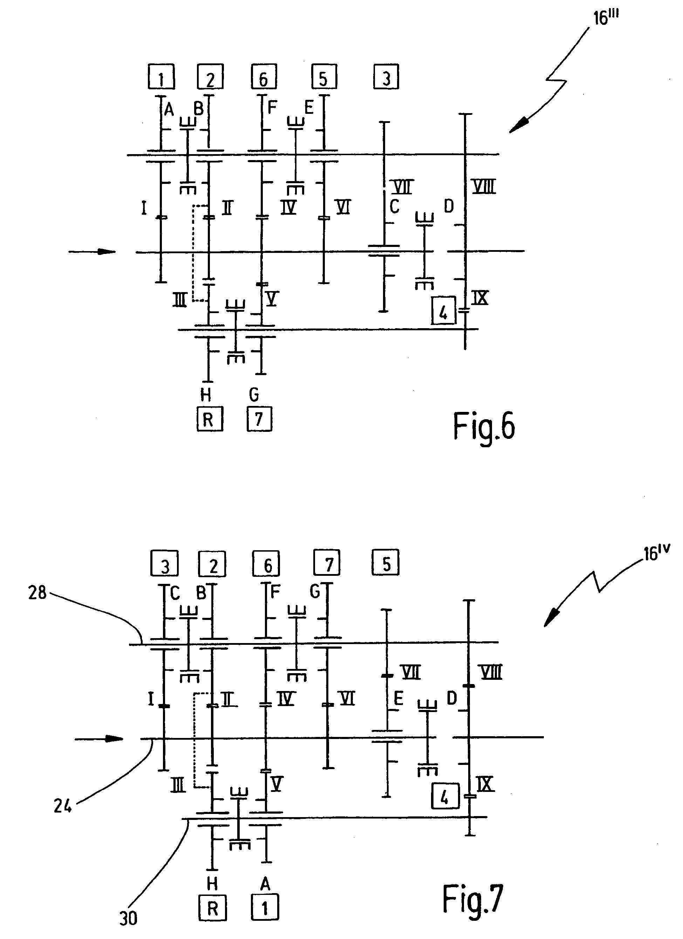

Fig. 6 zeigt ein Stufenwechselgetriebe 16"', das wiederum im Wesentlichen dem Layout des Stufenwechselgetriebes 16 der Fig. 1 entspricht. Hierbei sind lediglich die Losräder für die Rückwärtsgangstufe R und die Vorwärtsgangstufe 7 axial vertauscht, so dass eine Doppelnutzung über ein Festrad für die Vorwärtsgangstufen 6, 7 eingerichtet ist. In diesem Fall wird die Rückwärtsgangstufe R als Windungsgangstufe über die Vorwärtsgangstufe 2 eingerichtet.

Schließlich zeigt Fig. 7 eine alternative Ausführungsform eines Stufenwechselgetriebes 16^{IV}, das hinsichtlich Aufbau und Funktionsweise ebenfalls dem Stufenwechselgetriebe der Fig. 1 entspricht. Bei dem Stufenwechselgetriebe 16^{IV} kann ein anderes H-Schaltschema realisiert werden, als dies bei dem Stufenwechselgetriebe 16 der Fig. 1 der Fall ist.

Auf der ersten Vorgelegewelle 28 sind in dieser Reihenfolge vom Getriebeeingang aus gesehen Losräder für die Vorwärtsgangstufen 3, 2, 6, 7 sowie ein Festrad für die Vorwärtsgangstufe 5 angeordnet. Zwischen den Losrädern für die Vorwärtsgangstufen 3, 2 ist ein Schaltkupplungspaket mit Schaltkupplungen C, B zum Ein- und Auslegen der Vorwärtsgangstufen 2, 3 angeordnet. In entsprechender Weise ist zwischen den Losrädern für die Vorwärtsgangstufen 6, 7 ein Schaltkupplungspaket mit Schaltkupplungen F, G angeordnet.

Auf der zweiten Vorgelegewelle 30 sind, wiederum vom Getriebeeingang aus gesehen, ein Losrad für die Rückwärtsgangstufe R und ein Losrad für die Vorwärtsgangstufe 1 angeordnet. Hierbei befindet sich ein Schaltkupplungspaket mit Schaltkupplungen H, A zwischen diesen Losrädern.

Die Direktgangstufe ist bei dem Stufenwechselgetriebe 16^{IV} wiederum durch die Vorwärtsgangstufe 4 gebildet. Die Nachbar-Vorwärtsgangstufe ist in diesem Fall die Vorwärtsgangstufe 5, der ein Festrad auf der ersten Vorgelegewelle 28 und ein Losrad zugeordnet sind, das auf der Getriebeeingangswelle 24 gelagert ist.

Bei dem mittels des Stufenwechselgetriebes 16^{IV} realisierten H-Schema befinden sich die Rückwärtsgangstufe und die Vorwärtsgangstufe 1 in einer Schaltgasse. Weitere Schaltgassen beinhalten die Vorwärtsgangstufen 2, 3 bzw. 4, 5 und 6, 7. Auch bei dieser Variante kann ggf. eine Vorwärtsgangstufe 8 realisiert werden, bspw. durch Doppelnutzung mit dem Radsatz für die Vorwärtsgangstufe 7.

## Patentansprüche

1. Stufenwechselgetriebe (16) für den Längseinbau in einem Kraftfahrzeug (11), mit einer Eingangswelle (24), die in einer Längsachse ausgerichtet und mit einer Trennkupplung (14) verbindbar ist, mit einer Ausgangswelle (26), die koaxial zu der Eingangswelle (24) ausgerichtet ist, und mit einer ersten Vorgelegewelle (28), wobei die Eingangswelle (24) über wenigstens einen ersten schaltbaren Vorwärtsradsatz mit der ersten Vorgelegewelle (28) verbindbar ist, wobei die erste Vorgelegewelle (28) über einen Konstantenradsatz (66) mit der Ausgangswelle (26) verbunden ist, und wobei das Stufenwechselgetriebe (16) eine zweite Vorgelegewelle (30) aufweist, die parallel zu der ersten Vorgelegewelle (28) angeordnet ist, wobei die Eingangswelle (24) über wenigstens einen zweiten schaltbaren Vorwärtsradsatz mit der zweiten Vorgelegewelle (30) verbindbar ist und wobei die zweite Vorgelegewelle (30) über einen Konstantenradsatz (66) mit der Ausgangswelle (26) verbunden ist,
**dadurch gekennzeichnet, dass** eine Vorgelegelängsachse (72) der ersten Vorgelegewelle (28) und/oder eine Vorgelegelängsachse (74) der zweiten Vorgelegewelle (30) in einer vertikalen Projektion radial innerhalb der radialen Erstreckung des größten Rades (71) liegt bzw. liegen, das an der Eingangswelle (24) angeordnet ist.

2. Stufenwechselgetriebe nach Anspruch 1, **dadurch gekennzeichnet, dass** die Eingangswelle (24) über eine Direktschaltkupplung (D) zur Einrichtung einer Direktgangstufe (4) mit der Ausgangswelle (26) verbindbar ist.

3. Stufenwechselgetriebe nach Anspruch 2, **dadurch gekennzeichnet, dass** die Direktgangstufe (4) eine zweit- bis sechsthöchste Vorwärtsgangstufe ist.

4. Stufenwechselgetriebe nach Anspruch 2 oder 3, **dadurch gekennzeichnet, dass** an der Eingangswelle (24) eine mit der Direktschaltkupplung (D) zu einem Schaltkupplungspaket zusammengefasste Vorwärtsschaltkupplung für eine der Direktgangstufe (4) benachbarte Nachbar-Vorwärtsgangstufe (3) gelagert ist.

5. Stufenwechselgetriebe nach Anspruch 4, **dadurch gekennzeichnet, dass** Schaltkupplungen (A, B, E, F, G, H) für sämtliche Gangstufen (1, 2, 5-7, R) des Stufenwechselgetriebes (16) außer der Direktgangstufe (4) und der Nachbar-Vorwärtsgangstufe (3) an der ersten und/oder der zweiten Vorgelegewelle (28, 30) angeordnet sind.

6. Stufenwechselgetriebe nach einem der Ansprüche 1 bis 5, **dadurch gekennzeichnet, dass** eine Rückwärtsgangstufe (R) als Windungsgangstufe eingerichtet ist, wobei der Leistungsfluss von der Eingangswelle (24) über eine (28) der Vorgelegewellen (28, 30) zu der anderen Vorgelegewelle (30) und von dort zur Ausgangswelle (26) geführt ist.

7. Stufenwechselgetriebe nach einem der Ansprüche 1 bis 6, **dadurch gekennzeichnet, dass** Losräder von wenigstens zwei Vorwärtsgangstufen (6, 7; 5, 8) mit einem gemeinsamen Festrad (36; 38) in Eingriff stehen, das an der Eingangswelle (24) festgelegt ist.

8. Stufenwechselgetriebe nach einem der Ansprüche 1 bis 7, **dadurch gekennzeichnet, dass** auf der ersten Vorgelegewelle (28) ein Schaltkupplungspaket (A, B) für die Vorwärtsgangstufen 1, 2 und ein Schaltkupplungspaket (E, F) für die Vorwärtsgangstufen 5, 6 in dieser Reihenfolge oder umgekehrt, von einem Eingang des Stufenwechselgetriebes (16) aus gesehen, angeordnet sind.

9. Stufenwechselgetriebe nach einem der Ansprüche 1 bis 8, **dadurch gekennzeichnet, dass** auf der zweiten Vorgelegewelle (30) ein Schaltkupplungspaket (G, H) für eine Rückwärtsgangstufe (R) und für wenigstens eine Vorwärtsgangstufe (7; 1) angeordnet ist.

10. Stufenwechselgetriebe nach einem der Ansprüche 1-9, **dadurch gekennzeichnet, dass** auf der zweiten Vorgelegewelle (30) ferner ein Losrad (62) für eine Vorwärtsgangstufe 8 angeordnet ist, und zwar, von dem Eingang des Stufenwechselgetriebes (16) aus gesehen, hinter oder vor einem Losrad (60) für die Vorwärtsgangstufe 7.

11. Stufenwechselgetriebe nach einem der Ansprüche 1 bis 10, **dadurch gekennzeichnet, dass** die Vorlegelängsachse (72) der ersten Vorgelegewelle (28) und/oder die Vorgelegelängsachse (74) der zweiten Vorgelegewelle (30) unterhalb der Eingangswelle (24) angeordnet ist bzw. sind.

12. Stufenwechselgetriebe nach einem der Ansprüche 1 bis 11, **dadurch gekennzeichnet, dass** die Vorgelegelängsachsen (72, 74) in einer horizontalen Projektion radial außerhalb der radialen Erstreckung des größten Rades (71) liegen, das an der Eingangswelle (24) angeordnet ist.

13. Stufenwechselgetriebe nach einem der Ansprüche 1 bis 12, **dadurch gekennzeichnet, dass** das Stufenwechselgetriebe (16) als Handschaltgetriebe ausgebildet ist.

14. Stufenwechselgetriebe nach einem der Ansprüche 1 bis 13, **dadurch gekennzeichnet, dass** eine elektrische Maschine (68) mit einem Festrad (50) verbunden ist, das mit der ersten oder der zweiten Vorgelegewelle (28, 30) fest verbunden ist.

## Claims

1. Stepped change gearbox (16) for the longitudinal mounting in a motor vehicle (11), having an input shaft (24) which is aligned with a longitudinal axis and is connectable with a separation clutch (14), having an output shaft (26) which is aligned coaxially to the input shaft (24), and having a first layshaft (28), wherein the input shaft (24) is connectable to the first layshaft (28) via at least a first shiftable forward gear set, wherein the first layshaft (28) is connected to the output shaft (26) via a constant gear set (66), and wherein the stepped change gearbox (16) comprises a second layshaft (30) which is arranged parallel to the first layshaft (28), wherein the input shaft (24) is connectable to the second layshaft (30) via at least a second shiftable forward wheel set, and wherein the second layshaft (30) is connected to the output shaft (26) via a constant gear set (66),
**characterized in that** a layshaft longitudinal axis (72) of the first layshaft (28) and/or a layshaft longitudinal axis (74) of the second layshaft (30) lies or lie in a vertical projection radially within the radial extension of the largest wheel (71) which is ar ranged at the input shaft (24).

2. Stepped change gearbox according to claim 1, **characterized in that** the input shaft (24) is connectable to the output shaft (26) via a direct shift clutch (D) for establishing a direct gear stage (4).

3. Stepped change gearbox according to claim 2, **characterized in that** the direct gear stage (4) is a second to sixth highest forward gear stage.

4. Stepped change gearbox according to claim 2 or 3, **characterized in that** a forward shift clutch for a neighbour forward gear stage (3) adjacent to the direct gear stage is combined with the direct shift clutch (D) to a shift clutch package and is mounted at the input shaft (24).

5. Stepped change gearbox according to claim 4, **characterized in that** shifting clutches (A, B, E, F, G, H) for each of the gear stages (1, 2, 5-7, R) of the stepped change gearbox (16), except for the direct gear stage (4) and the neighbor forward gear stage (3), are arranged at the first and/or the second layshaft (28, 30).

6. Stepped change gearbox according to one of claims 1 to 5, **characterized in that** a reverse gear stage (R) is established as winding gear stage, wherein the power flow is guided from the input shaft (24) via one (28) of the layshafts (28, 30) to the other (30) layshaft and from there to the output shaft (26).

7. Stepped change gearbox according to one of claims 1 to 6, **characterized in that** loose wheels of at least two forward gear stages (6, 7; 5, 8) are engaged with a common fixed wheel (36; 38) which is fixed to the input shaft (24).

8. Stepped change gearbox according to one of claims 1 to 7, **characterized in that** a shift clutch package (A, B) for the forward gear stages 1, 2 and a shift clutch package (E, F) for the forward gear stages 5, 6 are, as seen from an input of the stepped change gar box (16), arranged in this order or vice-versa, at the first layshaft (28).

9. Stepped change gearbox according to one of claims 1 to 8, **characterized in that** a shift clutch package (G, H) for a reverse gear stage (R) and for at least one forward gear stage (7; 1) is arranged at the second layshaft (30).

10. Stepped change gearbox according to one of claims 1 to 9, **characterized in that**, further, a loose wheel (62) for a forward gear stage 8 is arranged on the second layshaft (30) behind or in front of a loose wheel for the forward gear stage 7, as seen from the input of the stepped change gearbox (16).

11. Stepped change gearbox according to one of claims 1 to 10, **characterized in that** the layshaft longitudinal axis (72) of the first layshaft (28) and/or the layshaft longitudinal axis (74) of the second layshaft (30) is or are arranged below the input shaft (24).

12. Stepped change gearbox according to one of claims 1 to 11, **characterized in that** the layshaft longitudinal axes (72, 74) lie in a horizontal projection outside of the radial extension of the largest wheel (71) which is arranged at the input shaft (24).

13. Stepped change gearbox according to one of claims 1 to 12, **characterized in that** the stepped change gearbox (16) is formed as manual shift gearbox.

14. Stepped change gearbox according to one of claims 1 to 13, **characterized in that** an electric machine (68) is connected to a fixed wheel (50) which is fixedly connected to the first or the second layshaft (28, 30).

## Revendications

1. Boîte de vitesses étagée (16) pour l'installation longitudinalement dans un véhicule automobile (11), comprenant un arbre d'entrée (24) qui est orienté suivant un axe longitudinal et qui peut être connecté à un embrayage de séparation (14), comprenant un arbre de sortie (26) qui est orienté coaxialement par rapport à l'arbre d'entrée (24), et comprenant un premier arbre intermédiaire (28), l'arbre d'entrée (24) pouvant être connecté par le biais d'au moins un premier jeu de pignons avant commutable au premier arbre intermédiaire (28), le premier arbre intermédiaire (28) étant connecté par le biais d'un jeu de pignons constant (66) à l'arbre de sortie (26), et la boîte de vitesses étagée (16) présentant un deuxième arbre intermédiaire (30) qui est disposé parallèlement au premier arbre intermédiaire (28), l'arbre d'entrée (24) pouvant être connecté au deuxième arbre intermédiaire (30) par le biais d'au moins un deuxième jeu de pignons avant commutable, et le deuxième arbre intermédiaire (30) étant connecté par le biais d'un jeu de pignons constant (66) à l'arbre de sortie (26),
**caractérisée en ce qu'**un axe longitudinal intermédiaire (72) du premier arbre intermédiaire (28) et/ou un axe longitudinal intermédiaire (74) du deuxième arbre intermédiaire (30) se situe ou se situent, en projection verticale, radialement à l'intérieur de l'étendue radiale du plus grand pignon (71), qui est disposé sur l'arbre d'entrée (24).

2. Boîte de vitesses étagée selon la revendication 1, **caractérisée en ce que** l'arbre d'entrée (24) peut être connecté à l'arbre de sortie (26) par le biais d'un embrayage de changement de vitesses direct (D) en vue de l'établissement d'un étage de rapport direct (4).

3. Boîte de vitesses étagée selon la revendication 2, **caractérisée en ce que** l'étage de rapport direct (4) est un étage de rapport de marche avant de deuxième à sixième niveau le plus élevé.

4. Boîte de vitesses étagée selon la revendication 2 ou 3, **caractérisée en ce qu'**un embrayage de changement de vitesses de marche avant, réuni à l'embrayage de changement de vitesses direct (D) pour former un paquet d'embrayages de changement de vitesses, est supporté sur l'arbre d'entrée (24), pour un étage de rapport de marche avant voisin (3) adjacent à l'étage de rapport direct (4).

5. Boîte de vitesses étagée selon la revendication 4, **caractérisée en ce que** des embrayages de changement de vitesses (A, B, E, F, G, H) pour tous les étages de rapports (1, 2, 5-7, R) de la boîte de vitesses étagée (16) sont disposés à l'extérieur de l'étage de rapport direct (4) et de l'étage de rapport de marche avant voisin (3) sur le premier et/ou le deuxième arbre intermédiaire (28, 30).

6. Boîte de vitesses étagée selon l'une quelconque des revendications 1 à 5, **caractérisée en ce qu'**un étage de rapport de marche arrière (R) est réalisé sous forme d'étage de rapport à enroulement, le flux de puissance de l'arbre d'entrée (24) étant guidé par le biais de l'un (28) des arbres intermédiaires (28, 30) jusqu'à l'autre arbre intermédiaire (30) et de là jusqu'à l'arbre de sortie (26).

7. Boîte de vitesses étagée selon l'une quelconque des revendications 1 à 6, **caractérisée en ce que** des pignons fous d'au moins deux étages de rapports de marche avant (6, 7 ; 5, 8) sont en prise avec un pignon fixe commun (36 ; 38) qui est fixé sur l'arbre d'entrée (24).

8. Boîte de vitesses étagée selon l'une quelconque des revendications 1 à 7, **caractérisée en ce qu'**un paquet d'embrayages de changement de vitesses (A, B) pour les étages de rapports de marche avant 1, 2 et un paquet d'embrayages de changement de vitesses (E, F) pour les étages de rapports de marche avant 5, 6 sont disposés dans cet ordre ou inversement, vu depuis une entrée de la boîte de vitesses étagée (16), sur le premier arbre intermédiaire (28).

9. Boîte de vitesses étagée selon l'une quelconque des revendications 1 à 8, **caractérisée en ce qu'**un paquet d'embrayages de changement de vitesses (G, H) pour un étage de rapports de marche arrière (R) et pour au moins un étage de rapports de marche avant (7 ; 1) est disposé sur le deuxième arbre intermédiaire (30).

10. Boîte de vitesses étagée selon l'une quelconque des revendications 1 à 9, **caractérisée en ce qu'**en outre un pignon fou (62) pour un étage de rapport de marche avant 8 est disposé sur le deuxième arbre intermédiaire (30), et ce, vu depuis l'entrée de la boîte de vitesses étagée (16), derrière ou devant un pignon fou (60) pour l'étage de rapport de marche avant 7.

11. Boîte de vitesses étagée selon l'une quelconque des revendications 1 à 10, **caractérisée en ce que** l'axe longitudinal intermédiaire (72) du premier arbre intermédiaire (28) et/ou l'axe longitudinal intermédiaire (74) du deuxième arbre intermédiaire (30) est ou sont disposé(s) sous l'arbre d'entrée (24).

12. Boîte de vitesses étagée selon l'une quelconque des revendications 1 à 11, **caractérisée en ce que** les axes longitudinaux intermédiaires (72, 74) sont situés en projection horizontale radialement à l'extérieur de l'étendue radiale du plus gros pignon (71), qui est disposé sur l'arbre d'entrée (24).

13. Boîte de vitesses étagée selon l'une quelconque des revendications 1 à 12, **caractérisée en ce que** la boîte de vitesses étagée (16) est réalisée sous forme de boîte de vitesses manuelle.

14. Boîte de vitesses étagée selon l'une quelconque des revendications 1 à 13, **caractérisée en ce qu'**une machine électrique (68) est connectée à un pignon fixe (50), qui est connecté fixement au premier ou au deuxième arbre intermédiaire (28, 30).
